**Europäisches Patentamt**

**European Patent Office**

**Office européen des brevets**

(11) Numéro de publication: **0 098 824**
**A1**

## (12) DEMANDE DE BREVET EUROPEEN

(21) Numéro de dépôt: **83870063.1**

(22) Date de dépôt: **22.06.83**

(51) Int. Cl.³: **A 01 D 27/00**, A 01 D 43/06

(30) Priorité: **01.07.82 BE 5005246**

(43) Date de publication de la demande: **18.01.84**
**Bulletin 84/3**

(84) Etats contractants désignés: **DE FR GB IT LU NL**

(71) Demandeur: **Dutrieux, Jean, Place Molenbaix, 58C,**
**B-7564 Molembaix (BE)**
Demandeur: **COCKERILL SAMBRE, Quai Greiner, 1,**
**B-4100 Seraing (BE)**

(72) Inventeur: **Dutrieux, Jean Camille, Place**
**Molenbaix, 58C, B-7564 Molenbaix (BE)**
Inventeur: **Tasset, Gérard Albert, rue des Fauvettes, 21,**
**B-6001 Marcinelle (BE)**

(74) Mandataire: **Hamende, Noel, Cockerill Sambre S.A. quai**
**Greiner 1, B-4100 Seraing (BE)**

(54) **Machine agricole.**

(57) Machine agricole comportant outre les moyens nécessaires à la récolte, des moyens pour se mouvoir, des moyens
de conduite, de direction et de commande des différents
organes, ... essentiellement caractérisée en ce qu'elle comporte au moins deux chassis (36, 38) porteurs distincts reliés
entre-eux par un système de liaison (40) tel que les mouvements de l'un des chassis ne sont pas directement ressentis par
le ou les autres; l'un des chassis (36) supporte les organes de
travail qui traitent le produit au sol, un autre (38) les moyens de
stockage du dit produit par exemple dans une trémie (30); le
système de liaison précité est formé par deux articulations
d'axe vertical (42) et horizontal (44), ce qui rend la machine
agricole apte à subir des mouvements de torsion autour d'un
axe de symétrie longitudinal perpendiculaire à l'axe de l'essieu
supportant la trémie de stockage.

MACHINE AGRICOLE.
--------------------

La présente invention a trait à une machine agricole et plus particulièrement une machine agricole combinée c'est-à-dire effectuant plusieurs opérations.

Il est connu en agriculture d'utiliser des machines qui accomplissent plusieurs opérations sur un produit déterminé. Les plus connues du grand public sont les moissonneuses batteuses, les récolteuses de pommes de terre, de betteraves, ou autres tubercules.

La suite de notre description sera essentiellement axée sur la récolte de betteraves, mais cela est fait uniquement dans un but

2.

de clarté afin de mieux définir la portée de l'invention et n'a aucun caractère limitatif quant aux domaines d'application possibles de la dite invention.

Les machines combinées de ce type comprennent au moins deux trains de roues motrices, un groupe moteur et à partir de l'avant vers l'arrière, une effeuilleuse, des éléments arracheurs et décrotteurs, un dispositif de transport selon un mouvement horizontal puis un autre dispositif de transport selon une direction ascendante par exemple un transporteur élévateur et enfin une trémie de stockage du produit récolté.

Il est connu que ces machines sont fort encombrantes de par la multiplicité des postes de travail où la betterave subit successivement plusieurs opérations.

Les problèmes principaux relatifs à ce type de machine sont les suivantes :

- leur poids et leur encombrement sont tels qu'ils exigent une grande puissance motrice pour les faire mouvoir sur terrain normal et leur utilisation est presque impossible en terrain détrempé, condition de travail qui n'est pas rare ;

- la construction classique prévoit que les opérations d'arrachage et de ramassage prennent place après le passage des roues porteuses avant, donc avec le risque de détruire ou abimer par l'action des dites roues une partie de la récolte ;

- les machines classiques sont construites sur un seul châssis portant les systèmes destinés à récolter la betterave et aussi la trémie en vue du stockage de cette dernière ; cette disposition présente l'inconvénient majeur que les systèmes de récolte précités voient leur position relative par rapport au sol être influencée par les effets que la trémie ou les mouvements de la charge

3.

de celle-ci exercent sur le dit châssis porteur;or il est connu
que la qualité du travail d'arrachage, entre autres, est directement
liée à la régularité de profondeur de pénétration dans le sol des
éléments arracheurs ;

- les machines classiques présentent aussi le désavantage
non négligeable d'être peu maniable ce qui est fort
important dans le cas de champs exigus ou mal proportionnés.

Le but de la présente invention est de remédier aux inconvénients précités par des moyens simples mis en oeuvre pour concevoir
une machine agricole combinée telle que décrite ci-après.

Dans la suite on utilisera le terme général "machine " pour
désigner une quelconque machine agricole combinée ainsi que définie
ci-dessus.

La machine, objet de la présente invention, comportant entre
autres les moyens nécessaires à la récolte, y compris
éventuellement les systèmes accessoires à cette récolte; des moyens
pour mouvoir la dite machine par exemple sur roues; des moyens de
conduite, direction et commande des différents organes; etc... est
essentiellement caractérisée en ce qu'elle présente au moins une
des particularités reprises ci-après, à savoir :

- elle comporte au moins deux châssis porteurs distincts,
l'un de ces châssis supportant les organes de travail
qui traitent le produit au sol, un autre supportant les
moyens de stockage du dit produit par exemple dans une
trémie; les châssis porteurs précités sont reliés entre
eux par un système tel que les mouvements, autres que
la traction ou poussée, de l'un des châssis ne sont pas
directement ressentis par le ou les autres, le système
de liaison ci-avant est formé par deux articulations,
l'une d'axe vertical et l'autre d'axe horizontal, ce
qui rend la machine agricole apte à subir des mouvements

4.

de torsion autour d'un axe de symétrie longitudinal, sensiblement horizontal et perpendiculaire à l'axe de l'essieu porteur du châssis arrière, c'est-à-dire celui supportant la trémie de stockage, l'axe de symétrie longitudinal de la partie du véhicule qui porte la trémie, tel que décrit ci-dessus, étant confondu avec l'axe horizontal de rotation; la machine agricole comporte également des dispositifs pour transporter le produit depuis son enlèvement du sol jusqu'à son stockage par exemple dans la trémie précitée et ce en étant à même de s'accommoder des mouvements relatifs des différents châssis en cause;

- elle présente une configuration telle que les organes de travail qui traitent le produit au sol sont sis de manière à rencontrer le produit au sol avant le passage au même endroit de la première roue porteuse ou du premier ensemble de roues ou autre système porteur du châssis support des organes de travail précités.

- la dite machine comporte un dispositif qui règle de manière continue ou non la position relative des organes de travail chargés de traiter le produit au sol.

Grâce à cette disposition, le train de roues avant ne subit plus l'influence de la torsion et du déséquilibre provoqués par la pertie de chargement arrière et ceci particulièrement en cours d'opération sur le champ.

Suivant une modalité de réalisation préférentielle de la machine, objet de l'invention, elle comporte deux châssis reliés entre eux par un système tel que l'assiette du premier châssis n'est pas directement tributaire du second.

La modalité précédente a pour effet d'obtenir une plus grande stabilité des organes de travail situés à l'avant de la machine comme par exemple l'effeuilleuse et les éléments d'arrachage.

0098824

5.

Suivant une autre modalité de réalisation d'une machine conformément à l'invention, les organes de travail précités chargés de traiter le produit au sol sont montés sur un châssis secondaire qui est fixé par un système approprié au châssis porteur dit principal de telle sorte qu'un dispositif à vérins sis entre le châssis secondaire et le châssis principal soit à même de modifier les positions relatives des deux châssis précités et ce en fonction des informations données par un dispositif, de préférence un palpeur, qui analyse la configuration du sol.

Suivant une autre modalité de réalisation de la machine, objet de l'invention, le transport du produit récolté depuis le châssis porteur relatif au traitement au sol jusqu'au châssis porteur de la trémie met en oeuvre un transporteur à paniers dont la course ascendante est inclinée sur la verticale et construit de telle sorte que les pierres, boues collées, terres,... peuvent s'échapper des paniers précités et retomber sur le sol.

Suivant encore une autre modalité de réalisation de la machine, objet de la présente invention, le transport du produit récolté jusqu'à la trémie.met en oeuvre un dispositif du type vis sans fin, tapis transporteur ou moyen similaire comportant un système apte à lui permettre de s'adapter aux mouvements respectifs des châssis sans entrainer obligatoirement un arrêt de fonctionnement du système de transport.

Suivant une réalisation préférentielle de la modalité précédente, le système de transport comporte un dispositif d'articulation comme des cardans, des pivots, des charnières ou des dispositifs analogues connus.

Une réalisation particulière de l'invention est décrite ci-après à l'aide d'un exemple non limitatif et en se référant aux dessins dans lesquels la figure 1 est une vue en élévation, la figure 2 une vue en plan, les figures 3 et 4 étant respectivement des vues en élévation et en plan de la partie avant portant les organes de travail de traitement du produit au sol et du dispositif de régulation de la position relative du châssis secondaire par rapport au châssis principal.

6.

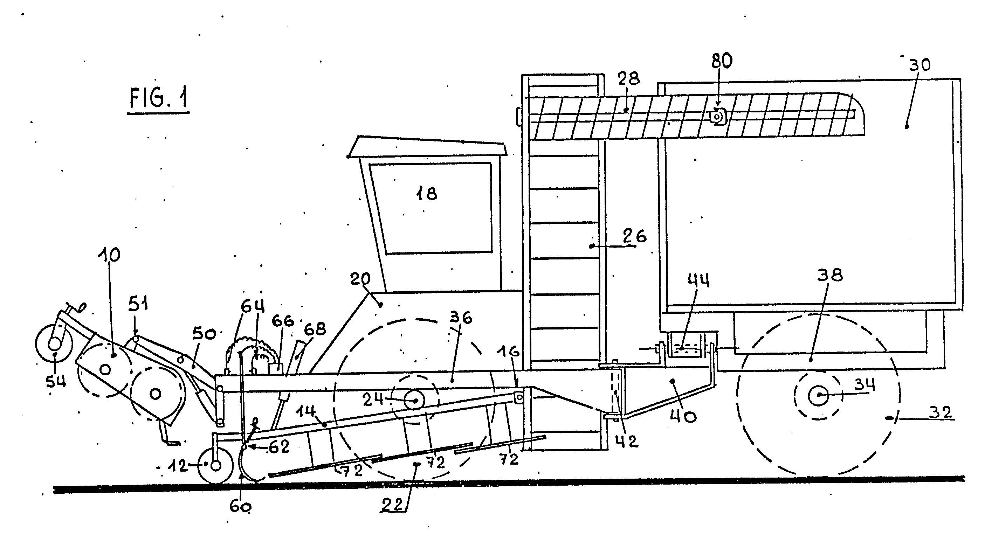

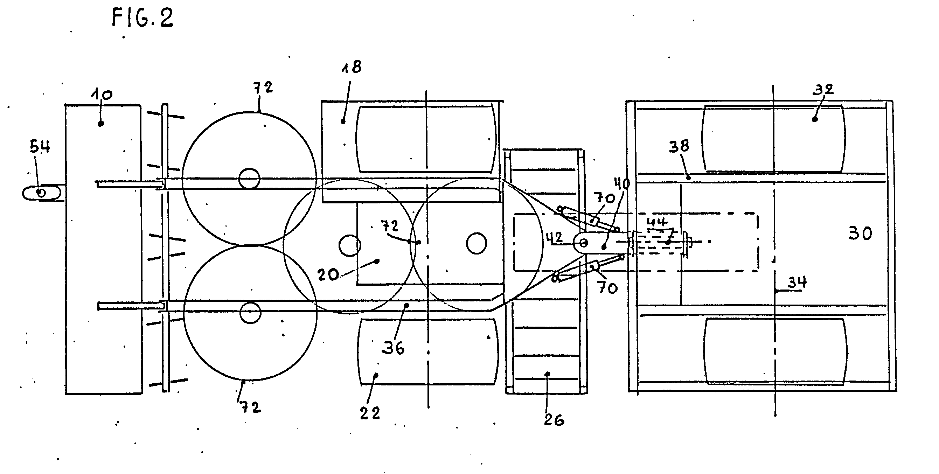

Sur les figures 1 et 2, on a représenté à la partie avant de la machine :la roue de jauge de profondeur 54 de l'effeuilleuse 10, les éléments arracheurs-décrotteurs 12, montés sur un châssis mobile 14 pivotant en 16, les soleils transporteurs 72, la cabine de conduite 18, le groupe moteur avec transmission 20, l'essieu avant 24 avec roues 22 ainsi que l'ensemble transporteur-élévateur 26 à paniers avec vis transporteuse 28 à cardans 80.

La partie arrière de la machine comprend une trémie de stockage 30 supportée par un essieu arrière 34 avec roues 32.

Conformément à l'invention, · on prévoit entré la partie.avant et la partie arrière une partie intermédiaire 40 pouvant pivoter autour d'un axe vertical 42 par rapport au châssis indépendant 36 de la partie avant et portant sur un axe horizontal 44 situé dans le sens de la longueur de la machine et sur lequel est monté le châssis indépendant 38 de la partie arrière de la machine, permettant à celle-ci de basculer autour de cet axe horizontal.

La machine agricole ainsi réalisée devient en plus, particulièrement maniable en déplacement. En effet, le guidage de la direction peut avantageusement avoir lieu hydrauliquement à l'aide de deux vérins 70 à double effet montés entre les châssis indépendants 36 et 38 et de part et d'autre de l'axe de rotation vertical 42.

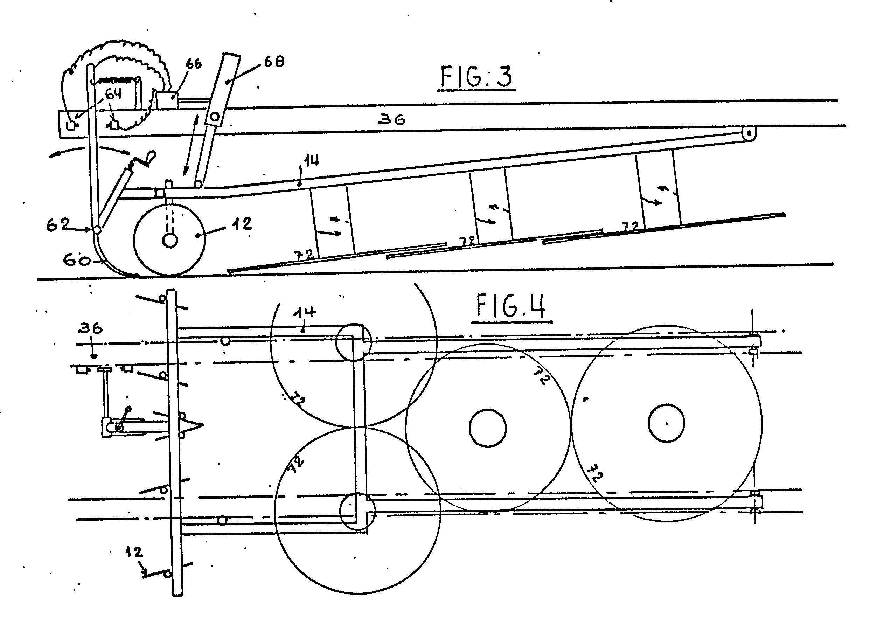

Afin d'augmenter encore l'efficacité de la machine, l'effeuilleuse 10 est supportée par des bras 50 en un pivot 51 situé très près du centre de gravité de l'effeuilleuse de manière à réduire au minimum les charges sur la roue de jauge de profondeur 54. D'autre part la hauteur de travail du châssis mobile 14 est avantageusement réglée par un palpeur 60 en forme de patin qui par pivotement autour d'un axe 62 provoque des contacts électriques en 64, ainsi qu'on le voit sur les figures 3 et 4.

Ces impulsions électriques sont envoyées de manière connue en soi vers un distributeur hydraulique 66 à commande électrique en liaison avec le vérin hydraulique 68 destiné à modifier la position du châssis mobile 14.

0098824

7.

## REVENDICATIONS

1. Machine agricole comportant entre autres les moyens
nécessaires à la récolte, y compris éventuellement les
systèmes accessoires à cette récolte; des moyens pour
mouvoir la dite machine par exemple sur roues; des
moyens de conduite, direction et commande des différents
organes; etc ... essentiellement caractérisée en ce
qu'elle présente au moins une des particularités reprises
ci-après, à savoir :

- elle comporte au moins deux châssis porteurs (36, 38)
distincts, l'un de ces châssis (36) supportant les
organes de travail qui traitent le produit au sol,
un autre (38) supportant les moyens de stockage du
dit produit par exemple dans une trémie; (30) les
châssis porteurs précités sont reliés entre eux par
un système (40) tel que les mouvements, autres que
la traction ou poussée, de l'un des châssis ne sont
pas directement ressentis par le ou les autres, le
système de liaison ci-avant est formé par deux articulations, l'une d'axe vertical (42) et l'autre
d'axe horizontal (44), ce qui rend la machine agricole
apte à subir des mouvements de torsion autour d'un
axe de symétrie longitudinal, sensiblement horizontal
et perpendiculaire à l'axe de l'essieu porteur du
châssis arrière (38), c'est-à-dire celui supportant
la trémie de stockage (30), l'axe de symétrie longitudinal de la partie du véhicule qui porte la trémie,
tel que décrit ci-dessus, étant confondu avec l'axe
horizontal de rotation; la machine agricole comporte
également des dispositifs (26.72) pour transporter
le produit depuis son enlèvement du sol jusqu'à son
stockage par exemple dans la trémie précitée et ce
en étant à même de s'accomoder des mouvements relatifs
des différents châssis en cause;

8.

- elle présente une configuration telle que les organes de travail qui traitent le produit au sol, sont sis de manière à rencontrer le produit au sol avant le passage au même endroit de la première roue porteuse (22) ou du premier ensemble de roues ou autre système porteur du châssis support des organes de travail précités;
- la dite machine comporte un dispositif (60) qui règle de manière continue ou non la position relative des organes de travail chargés de traiter le produit au sol.

2. Machine agricole suivant la revendication 1, caractérisée en ce qu'elle comporte deux châssis (36, 38) reliés entre eux par eux par un système (40) tel que l'assiette du premier châssis n'est pas directement tributaire du second.

3. Machine agricole suivant les revendications 1 ou 2, caractérisée en ce que les organes de travail précités chargés·de traiter le produit au sol sont montés sur un châssis secondaire (50) qui est fixé par un système approprié au châssis porteur dit principal de telle sorte qu'un dispositif à vérins sis entre le châssis secondaire et le châssis principal soit à même de modifier les positions relatives des deux châssis précités et ce en fonction des informations données par un dispositif (60), de préférence un palpeur, qui analyse la configuration du sol.

4. Machine agricole suivant une ou plusieurs des revendications 1 à 3, caractérisée en ce que le transport du produit agricole, depuis le châssis porteur (36) relatif au traitement au sol jusqu'au châssis porteur (38) de la trémie, met en oeuvre un transporteur à paniers (26) dont la course ascendante est inclinée sur la verticale et construit de telle sorte que les pierres, boues collées, terres ... peuvent s'échapper des paniers précités et retomber sur le sol.

9.

5.  Machine agricole suivant une ou plusieurs des revendications 1 à 4, caractérisée en ce que le transport du produit récolté jusque la trémie met en oeuvre un dispositif (28) du type vis sans fin, tapis transporteur ou moyen similaire comportant un système (80) apte à lui permettre de s'adapter aux mouvements respectifs des chassis sans entraîner obligatoirement un arrêt de fonctionnement du système de transport.

6.  Machine agricole suivant la revendication 5, caractérisée en ce que le système de transport comporte un dispositif d'articulation (80) comme des cardans, des pivots, des charnières ou des dispositifs analogues connus.

7.  Machine agricole selon la réalisation particulière faisant l'objet de l'exemple et des dessins de la description.

FIG. 1

FIG.2

FIG. 3

FIG. 4

36

14

12

62

60

64

66

68

72

0098824

Office européen
des brevets

**RAPPORT DE RECHERCHE EUROPEENNE**

Numéro de la demande

EP  83 87 0063

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 340 029  (MATROT)<br>* en entier * | 1-5,7 | A 01 D  27/00<br>A 01 D  43/06 |
| Y | FR-A-1 209 973  (CAUSSE)<br>* résumé; figures 3,4 * | 1,2 | |
| A | US-A-3 583 137  (LOZEN)<br>* colonne 5, lignes 11-33; figure 1 * | 1,2 | |
| A | DE-A-2 125 227  (BLEINROTH)<br>*  page 4, paragraphe 7 - page 5, paragraphe 1; figure 1 * | 1,3 | |
| A | BE-A-  806 267  (DUTRIEUX)<br>* revendications; figure 1 * | 1,3-5 | |
| A | US-A-2 970 710  (JENSEN)<br>* figure 6 * | 6 | A 01 D<br>B 62 D |
| A | US-A-3 901 008  (TAYLOR) | | |
| A | FR-A-2 086 803  (DENIS) | | |

DOMAINES TECHNIQUES RECHERCHES (Int. Cl. 3)

Le présent rapport de recherche a été établi pour toutes les revendications

| Lieu de la recherche<br>LA HAYE | Date d'achèvement de la recherche<br>10-10-1983 | Examinateur<br>MARTIN D.R.V. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82